# EUROPEAN PATENT APPLICATION

(11) **EP 4 620 904 A1**
(43) Date of publication of application: **24.09.2025**
(21) Application number: 24165271.8
(22) Date of filing: 21.03.2024
(51) Int. Cl.: C01B 3/04, C01C 1/02

(54) **APPARATUS FOR PRODUCING HYDROGEN, FROM AN AMMONIA FEEDSTOCK STREAM**

(71) Applicant: L'AIR LIQUIDE, SOCIETE ANONYME POUR L'ETUDE ET L'EXPLOITATION DES PROCEDES GEORGES CLAUDE, 75007 Paris (FR)
(72) Inventor: Vicari, Lorenzo, 60439 Frankfurt am Main (DE); Kuzniar, Jakub, 31-545 Krakow (PL); Shrivastava, Swatantra Kumar, 60439 Frankfurt am Main (DE); Williams, Bryce, 60388 Frankfurt (DE); Lutz, Michael, 60439 Frankfurt am Main (DE); Hyla, Kaja, 31-545 Krakow (PL); Ulber, Dieter, 60439 Frankfurt am Main (DE)
(74) Representative: Air Liquide

(57) **Abstract**

The invention relates to an apparatus (2) for producing hydrogen, from a feedstock stream (3) comprising ammonia, traces of water and oil contaminants, said apparatus (2) comprising:
- a vaporizer (4) comprising a vaporization chamber (6) configured to receive the feedstock stream (3) and produce a vaporized purified ammonia stream (7), said vaporization chamber (6) comprising a blowdown outlet (8) configured to discharge a blowdown stream (10) comprising the traces of water and oil contaminants from said vaporization chamber (6);
- an ammonia cracking reactor (12) for performing an endothermic reaction of said vaporized purified ammonia stream (7), thereby producing said hydrogen; and
- a fired equipment (14);
wherein said blowdown outlet (8) is connected to the fired equipment (14) for providing the blowdown stream (10) as an ammonia fuel stream to the fired equipment (14).

## Description

The present invention relates to apparatus for producing hydrogen, from a feedstock stream comprising ammonia.

Hydrogen is renowned for its lightweight nature and optimal combustion properties as a fuel and its environment-friendliness during its combustion or during its electrochemical conversion, for example for a fuel cell. That is, there is no emission of any carbon dioxide (CO2), particulate or sulfur during the use of hydrogen as a fuel. This makes hydrogen a vector for the energy transition.

As a matter of fact, hydrogen can be produced from an ammonia cracking reaction of a feedstock stream containing ammonia. In particular, vaporized purified ammonia streams (or anhydrous ammonia), of various purities, can be used in the ammonia cracking reaction to produce the hydrogen.

The purity control of said vaporized purified ammonia stream, from contaminants, in particular traces of water to avoid the stress corrosion cracking phenomenon and oil contaminants from lubricated syngas compressors in the ammonia production unit, which are not removed from feedstock stream, is of utmost importance. Indeed, catalysts, such as nickel or ruthenium, used in the ammonia cracking reaction, exhibit active sites that can be blocked by said contaminants, in particular by the traces of water and/or the oil contaminants.

A current method of producing said vaporized purified ammonia stream relies on distillation of ammonia comprising traces of water and/or oil contaminants (hereafter a "commercial grade ammonia"). However, this method is costly to implement in terms of capital cost of related equipment and operating costs for the distillation. Furthermore, a high-performance oil filter and a gas dryer, which are expensive, are further required to remove the traces of water and/or oil contaminants present in said vaporized purified ammonia stream produced from the current method, so as to attain a satisfactory purity of the vaporized purified ammonia stream.

As a consequence, there is a need to overcome the aforementioned issues, in particular a need to cope with a large-scale and a cost-effective production of the vaporized purified ammonia stream with a satisfactory purity, while minimizing the waste of the ammonia of the feedstock stream.

For this purpose, the invention proposes an apparatus for producing hydrogen, from a feedstock stream comprising ammonia and traces, said traces comprising traces of water and/or oil contaminants, said apparatus comprising:
- a vaporizer comprising a vaporization chamber configured to receive the feedstock stream and produce a vaporized purified ammonia stream, said vaporization chamber comprising a blowdown outlet configured to discharge a blowdown stream comprising the traces of water and/or oil contaminants from said vaporization chamber;
- an ammonia cracking reactor for performing an endothermic reaction of said vaporized purified ammonia stream, thereby producing said hydrogen; and
- a fired equipment;
wherein said blowdown outlet is connected to the fired equipment for providing the blowdown stream as an ammonia fuel stream to the fired equipment.

Thanks to the invention, said traces of water and/or oil contaminants in said vaporization chamber can be efficiently removed with the blowdown stream through the blowdown outlet. This allows to avoid accumulation of said traces of water and/or oil contaminants in said vaporization chamber, and this enables the production of said vaporized purified ammonia stream with a satisfactory purity.

As a consequence, said vaporized purified ammonia stream can be used in the ammonia cracking reactor comprising at least one catalyst bed suitable for cracking said vaporized purified ammonia stream, without poisoning the catalyst bed with said traces of water and/or oil contaminants.

Moreover, it is noteworthy that the blowdown stream is provided as an ammonia fuel stream to the fired equipment during the production of said vaporized purified ammonia stream, such that the losses of the ammonia of the feedstock stream can be minimized.

Stated differently, the invention allows the vaporized purified ammonia stream as well as the blowdown stream to be used in two distinct applications, i.e., for ammonia cracking reaction and for combustion in the fired equipment, such that the ammonia stream can be fully utilized.

In a nutshell, the invention enables a large-scale and cost-effective production of the vaporized purified ammonia stream with a satisfactory purity for ammonia cracking reaction, and also enables the production of the blowdown stream as an ammonia fuel stream to the fired equipment, such that the waste of the ammonia from the feedstock stream can be minimized.

In one embodiment, the apparatus comprises a valve configured to regulate the flow rate of the blowdown stream. Preferably, said valve can be downstream of the blowdown outlet.

In one embodiment, the vaporizer comprises a vapor outlet for said vaporized purified ammonia stream and said vapor outlet is connected to the ammonia cracking reactor for providing the vaporized purified ammonia stream as a feed to the ammonia cracking reactor.

In one embodiment, the fired equipment comprises a furnace arranged in a thermal communication with the ammonia cracking reactor to provide heat to the endothermic reaction (ammonia cracking reaction). The fired equipment may as well or in alternative comprise a boiler, a process stream pre-heater, or any other device performing a combustion.

In one embodiment, the apparatus comprises a blowdown stream vaporizer to vaporize said blowdown stream and provide a vaporized blowdown stream as a fuel to the fired equipment.

In one embodiment, the blowdown stream vaporizer comprises a blowdown vapor outlet for said vaporized blowdown stream and said blowdown vapor outlet is connected to the fired equipment for providing the vaporized blowdown stream as a fuel to the fired equipment.

In one embodiment, the blowdown stream vaporizer comprises a blowdown vaporization chamber comprising a waste blowdown outlet configured to discharge a waste blowdown stream comprising traces of water and/or oil contaminants from said blowdown vaporization chamber. Thus, said waste blowdown outlet can advantageously be used for providing the waste blowdown stream to be disposed (NNF, normally no flow) or to be used as a reducing agent, in particular as a nitrogen oxide reducing agent.

In one embodiment, the apparatus comprises a supplemental blowdown stream vaporizer to vaporize said waste blowdown stream and provide a vaporized waste blowdown stream as a fuel to the fired equipment.

In one embodiment, the supplemental blowdown stream vaporizer comprises a supplemental blowdown vapor outlet for said vaporized waste blowdown stream and said supplemental blowdown vapor outlet is connected to the fired equipment for providing the vaporized waste blowdown stream as a fuel to the fired equipment.

In one embodiment, the supplemental blowdown stream vaporizer comprises a supplemental blowdown vaporization chamber comprising a supplemental waste blowdown outlet configured to discharge a supplemental waste blowdown stream comprising traces of water and/or oil contaminants from said supplemental blowdown vaporization chamber. Thus, said supplemental waste blowdown outlet is configured for providing the supplemental waste blowdown stream to be disposed (NNF, normally no flow) or to be used as a reducing agent, in particular as a nitrogen oxide reducing agent.

In one embodiment, the vaporizer comprises a heat exchanger, in particular comprising at least one tube configured for receiving a heating medium, said heat exchanger being arranged to provide heat to at least partially vaporize the feedstock stream in said vaporization chamber. Said heat exchanger comprises at least an inlet for receiving a heating medium, and at least an outlet for letting out the heating medium. Of course, in the scope of the invention, the blowdown stream vaporizer and/or the supplemental blowdown stream vaporizer may as well comprise a heat exchanger. Different heating mediums may be used for each of the vaporizer, blowdown stream vaporizer and supplemental blowdown stream vaporizer, such as process streams from the ammonia cracking process or utilities, such as steam.

In one embodiment, the apparatus comprises one or more superheaters downstream of the vapor outlet so as to superheat the vaporized purified ammonia stream. Thus, a superheated vaporized purified ammonia stream is provided.

This way, a heat input required at the ammonia cracking reactor can be minimized and the yield of ammonia cracking reaction can be optimized.

In one embodiment, the apparatus comprises one or more fuel superheaters to superheat said vaporized blowdown stream to provide a superheated blowdown stream as a fuel to the fired equipment.

In other words, the fuel superheater is downstream of the blowdown stream vaporizer, so as to avoid water and ammonia condensation along the line downstream, and thus to avoid corrosion caused by the condensation. According to normal industry practice, the use of heat tracing on the piping could also be used to avoid such condensation.

In one embodiment, the apparatus comprises one or more fuel superheaters to superheat said vaporized blowdown stream and said vaporized waste blowdown stream to provide a superheated blowdown stream and a superheated vaporized blowdown stream as a fuel to the fired equipment.

In one embodiment, the apparatus comprises a programmable logic controller (PLC) configured to regulate the heating of at least one of:
- the feedstock stream;
- the vaporized purified ammonia stream;
- the blowdown stream;
- the waste blowdown stream; and/or
- the supplemental waste blowdown stream.

The programmable logic controller (PLC) is configured to adjust the flow rate of the blowdown stream to regulate the water content in the vaporized purified ammonia stream.

In one embodiment, the apparatus comprises an analyzer configured to determine the water content of:
- the feedstock stream;
- the vaporized purified ammonia stream;
- the blowdown stream;
- the waste blowdown stream; and/or
- the supplemental waste blowdown stream.

In one embodiment, the programmable logic controller and the analyzer form a feedback loop allowing to control the water content in the vaporized purified ammonia stream.

The invention also proposes a process for producing, from a feedstock stream,
a vaporized purified ammonia stream for an ammonia cracking reaction, and
at least one blowdown stream as an ammonia fuel stream, in particular for combustion, said feedstock stream comprising ammonia and traces, said traces comprising traces of water and/or oil contaminants;
said process comprising the following steps:
   - providing the feedstock stream in a vaporization chamber configured to receive the feedstock stream;
   - vaporizing a part of the feedstock stream thereby producing said vaporized purified ammonia stream being vaporized; and
   - removing the traces of water and/or oil contaminants from said vaporization chamber, said traces being carried away as a part of the blowdown stream exiting via a blowdown outlet.

In one embodiment, vaporizing a part of the feedstock stream comprises heating the feedstock stream, in particular with a heating medium.

Alternatively, vaporizing a part of the feedstock stream comprises decreasing the pressure of the vaporization chamber.

In one embodiment, said process comprises the step of:
- continuously removing the traces of water and/or oil contaminants, in particular in the liquid phase, from said vaporization chamber, said traces being continuously carried away by the blowdown stream exiting via the blowdown outlet.

In one embodiment, said process comprises the step of:
- discontinuously removing, with a regular time interval, the traces of water and/or oil contaminants, in particular in the liquid phase, from said vaporization chamber, said traces being carried away by the blowdown stream exiting via the blowdown outlet.

In one embodiment, the flow rate of ammonia exiting via said blowdown outlet represents between 0,1 and 15 % of the feedstock stream flow rate, more preferably between 1% and 8%.

In one embodiment, said ammonia fuel stream is combusted to provide a heat input to the process, in particular to provide heat to the ammonia cracking reaction.

In one embodiment, at least part of the vaporized purified ammonia stream is used as a feed to the ammonia cracking reaction.

In one embodiment, a part of the vaporized purified ammonia stream is combusted, for example to provide a heat to the process, for example a heat input to the ammonia cracking reaction.

In one embodiment, said process comprises the step of:
- vaporizing a part of the blowdown stream to provide a vaporized blowdown stream as said ammonia fuel stream for combustion.

In one embodiment, the process comprises removing the traces of water and/or oil contaminants from the blowdown stream, said traces exiting via a waste blowdown stream.

In one embodiment, the process comprises discontinuously removing, with a regular time interval, the traces of water and/or oil contaminants from the blowdown stream, said traces exiting via the waste blowdown stream.

In one embodiment, said process comprises the step of:
- vaporizing a part of the waste blowdown stream to provide a vaporized waste blowdown stream as a fuel to be combusted to provide a heat input to the process, in particular to provide heat to the ammonia cracking reaction.

In one embodiment, the process comprises removing the traces of water and/or oil contaminants from the waste blowdown stream, said traces exiting via a supplemental waste blowdown stream.

In one embodiment, the process comprises discontinuously removing, with a regular time interval, the traces of water and/or oil contaminants from the waste blowdown stream, said traces exiting via the supplemental waste blowdown stream.

In one embodiment, the vaporized waste blowdown stream is condensed with cooling water, a refrigerated ammonia or other utility, for example from battery limit, and sent back to the process, for example as the feedstock stream.

In one embodiment, at least a part of the blowdown stream, a part of the waste blowdown stream and/or a part of the supplemental waste blowdown stream, is used as a reducing agent in a nitrogen oxide (NOx) reduction reaction.

In one embodiment, the process further comprises the step of:
- recycling of a part of said blowdown stream to the feedstock stream by distillation, for example a cryogenic distillation, by microfiltration, adsorption, permeation through a membrane or any other suitable technology.

Thus, said part of said blowdown stream can be recovered, condensed and pumped back to the feedstock stream. In the case of the recycling by microfiltration, the residues collected separately from the microfiltration are collected and included as waste.

In one embodiment, the process comprises controlling the vaporization of the feedstock stream, said process comprises the following steps:
- analyzing the water content in the vaporized purified ammonia and blowdown stream(s);
- comparing the water content with a predetermined value of the water content;
- adjusting the flow rate of the blowdown stream to regulate the water content in the vaporized purified ammonia stream.

In one embodiment, the water content in the vaporized purified ammonia stream may be determined through an analyzer, in particular connected to a programmable logic controller (PLC). Said programmable logic controller (PLC) is adapted to regulate the flow rate of the blowdown stream.

In one embodiment, the process comprises a step of regulating the flow rate of the blowdown stream, with a programmable logic controller (PLC).

In one embodiment, the process comprises: - keeping the concentration of water in the blowdown stream in a range between 5 and 30 w/w % while adjusting the flow rate of the blowdown stream, in particular with the programmable logic controller (PLC), so as to use the blowdown stream as nitrogen oxide (NOx) reducing agent.

In one embodiment, the feedstock stream comprises said traces of oil contaminants in the range of 2 to 50ppm, preferably in the range of 2 to 20ppm and/or said traces of water in the range of 1ppm to 2 w/w%, preferably in the range of 1ppm to 1 w/w%.

The invention also relates to a vaporizer, for producing hydrogen, from a feedstock stream comprising ammonia, traces of water and/or oil contaminants, said vaporizer comprising:
- a vaporization chamber configured to receive the feedstock stream and produce a vaporized purified ammonia stream, said vaporization chamber comprising a blowdown outlet configured to remove a blowdown stream comprising the traces of water and/or oil contaminants from said vaporization chamber;
wherein said blowdown outlet is configured to be connected to a fired equipment for providing the blowdown stream as an ammonia fuel stream to the fired equipment.

Some of the dependent features corresponding to the apparatus can also be related to the vaporizer, if applicable.

In the scope of the invention, all the features applying for the vaporization chamber may apply for the blowdown vaporization chamber and the supplemental blowdown vaporization chamber. In addition, all the features applying for the vapor outlet may apply for the blowdown vapor outlet and the supplemental blowdown vapor outlet.

In the various figures, identical elements bear the same reference signs.

The following embodiments are examples. Although the description refers to one or more embodiments, this does not necessarily mean that each reference relates to the same embodiment, or that the features only apply to a single embodiment. Individual features of various embodiments can also be combined or interchanged in order to create other embodiments.
Figure 1 is a schematic representation of the apparatus for producing hydrogen, in accordance with one embodiment of the present invention.
Figure 2 is a schematic representation of the apparatus for producing hydrogen, in accordance with another embodiment of the present invention.
Figure 3 is a schematic representation of the apparatus for producing hydrogen, in accordance with another embodiment of the present invention.
Figure 4 is a schematic representation of the apparatus for producing hydrogen, in accordance with another embodiment of the present invention.
Figure 5 is a schematic representation of the apparatus for producing hydrogen, in accordance with another embodiment of the present invention.

In the following description, the word "connecting" in relation to a line, a conduit or a pipe shall be understood as fluidically connecting.

The term "fired equipment" denotes that the combustion is made with the formation of a flame to facilitate combustion. This may be used to provide heat to the ammonia cracking process. Depending on the conditions, the flame may or may not be visible, so-called "flameless" operation.

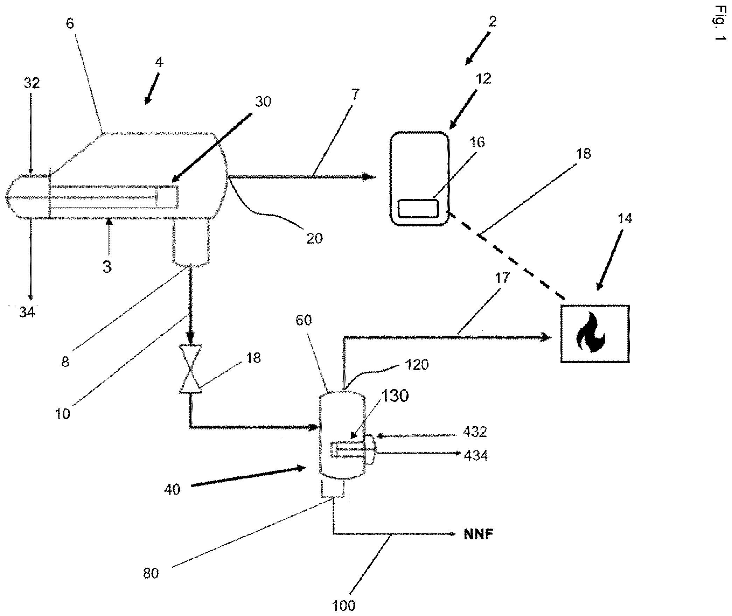

Referring to figures 1 to 5 an apparatus 2 for producing hydrogen, from a feedstock stream 3 comprising ammonia, traces of water and oil contaminants is represented.

As particularly illustrated in figure 1, said apparatus 2 comprises:
- a vaporizer 4 comprising a vaporization chamber 6 configured to receive the feedstock stream 3 and produce a vaporized purified ammonia stream 7, said vaporization chamber 6 comprising a blowdown outlet 8 configured to discharge a blowdown stream 10 comprising the traces of water and oil contaminants from said vaporization chamber 6;
- an ammonia cracking reactor 12 for performing an endothermic reaction of said vaporized purified ammonia stream 7, thereby producing said hydrogen; and
- a fired equipment 14;
wherein said blowdown outlet is connected to the fired equipment 14 for providing the blowdown stream 10 as an ammonia fuel stream to the fired equipment 14.

Thanks to the invention, said traces of water and oil contaminants in said vaporization chamber 6 can be efficiently removed with the blowdown stream 10 through the blowdown outlet 8. This allows to avoid accumulation of said traces of water and oil contaminants in said vaporization chamber 6, and this enables the production of said vaporized purified ammonia stream 7 with a satisfactory purity. In addition, the vaporizer 4 allows to produce said vaporized purified ammonia stream 7 in an efficient manner to meet the current demand, compared to a conventional method, such as distillation.

As a consequence, said vaporized purified ammonia feed stream 7 can be used in the ammonia cracking reactor 12 comprising a catalyst bed 16 suitable for cracking said vaporized purified ammonia feed stream, without poisoning the catalyst bed 16 with said traces of water and oil contaminants.

Moreover, it is noteworthy that the blowdown stream 10 is provided as an ammonia fuel stream to the fired equipment 14 during the production of said vaporized purified ammonia stream, such that the waste of the ammonia of the feedstock stream 3 can be minimized.

Stated differently, the invention allows the vaporized purified ammonia stream 7 as well as the blowdown stream 10 to be used in two distinct applications, i.e., for ammonia cracking reaction and for combustion in the fired equipment 14, such that the ammonia stream can be fully utilized. The temperature of the ammonia cracking reaction is advantageously comprised between 500 and 900°C.

In a nutshell, the invention enables a large-scale and cost-effective production of the vaporized purified ammonia stream 7 with a satisfactory purity for ammonia cracking reaction, and also enables the production of the blowdown stream 10 as an ammonia fuel stream to the fired equipment 14, such that the waste of the ammonia from the feedstock stream 3 can be minimized.

The apparatus 2 comprises a valve 18 configured to regulate the flow rate of the blowdown stream 10. Preferably, said valve can be downstream of the blowdown outlet 8. The apparatus 2 also comprises a valve 118 configured to regulate the vaporized blowdown stream 17 and a valve 119 configured to regulate the waste blowdown stream 100.

The fired equipment 14 comprises a furnace arranged in a thermal communication 19 with the ammonia cracking reactor 12 to provide heat to the ammonia cracking reaction.

The vaporizer 4 comprises a vapor outlet 20 for said vaporized purified ammonia stream 7 and said vapor outlet is connected to the ammonia cracking reactor 12 for providing the vaporized purified ammonia stream 7 as a feed to the ammonia cracking reactor 12.

As shown in figures 1, 2, 4 and 5, the apparatus 2 comprises a blowdown stream vaporizer 40 to vaporize said blowdown stream 10 and provide a vaporized blowdown stream 17 as a fuel to the fired equipment 14. The blowdown stream vaporizer 40 comprises a blowdown vapor outlet 120 for said vaporized blowdown stream and said blowdown vapor outlet is connected to the fired equipment 14 for providing the vaporized blowdown stream 17 as a fuel to the fired equipment 14.

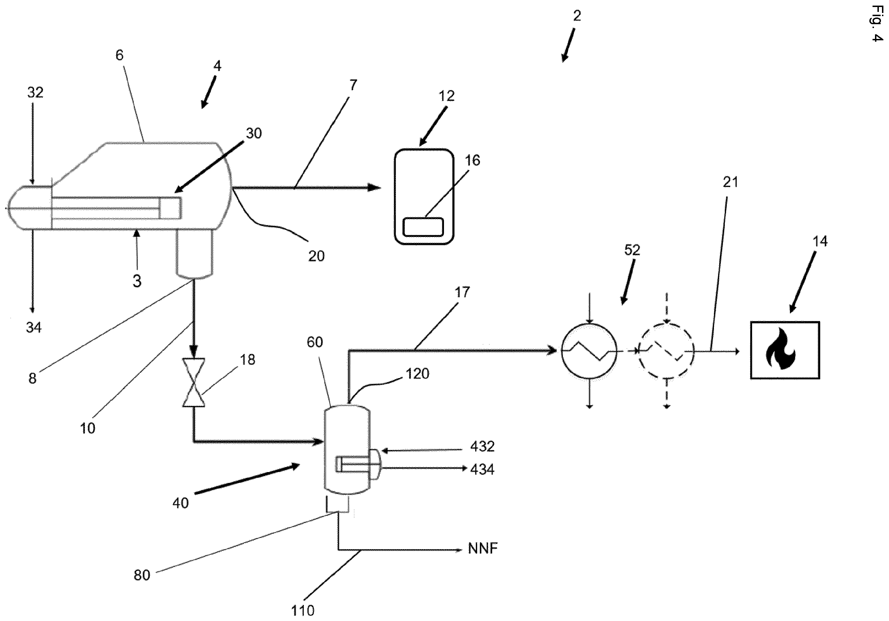

As shown particularly in figure 1 and 4, the blowdown stream vaporizer 40 comprises a blowdown vaporization chamber 60 comprising a waste blowdown outlet 80 configured to discharge a waste blowdown stream 100 comprising traces of water and oil contaminants from said blowdown vaporization chamber 60. Thus, said waste blowdown outlet 80 can advantageously be used for providing the waste blowdown stream 100 to be disposed (NNF, normally no flow), or to be used as a reducing agent, in particular as a nitrogen oxide reducing agent.

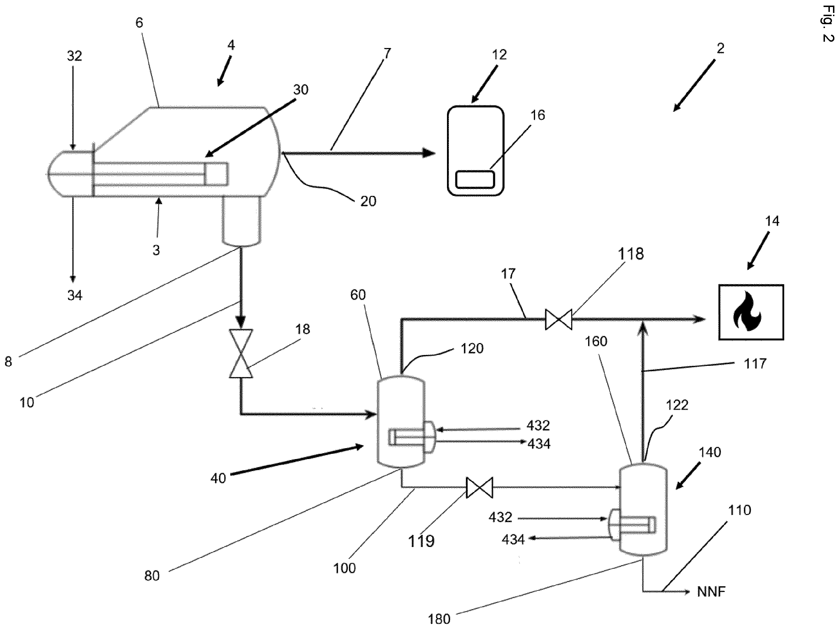

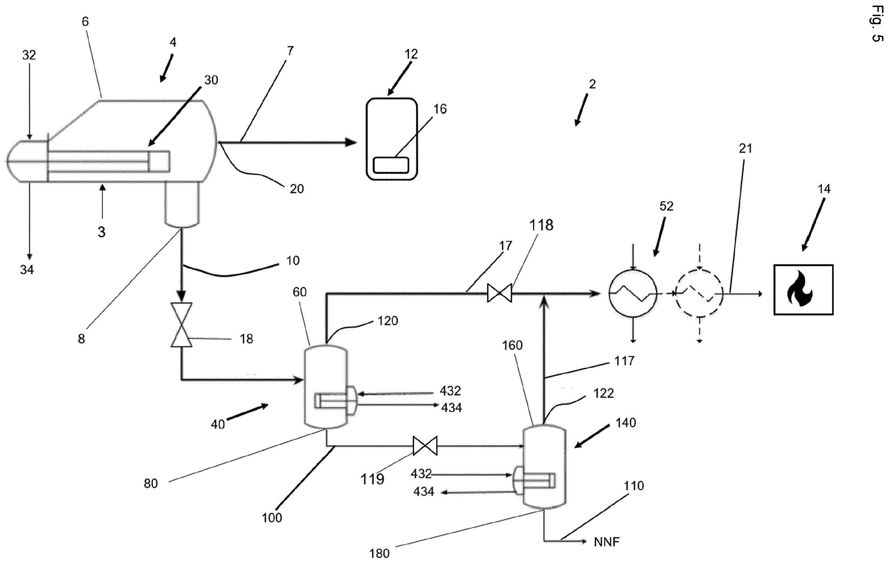

As shown in figures 2 and 5, the apparatus 2 comprises a blowdown stream vaporizer 140 to vaporize said waste blowdown stream 100 and provide a vaporized waste blowdown stream 117 as a fuel to the fired equipment 14. The blowdown stream vaporizer 140 comprises a supplemental blowdown vapor outlet 122 for said vaporized waste blowdown stream and said supplemental blowdown vapor outlet is connected to the fired equipment 14 for providing the vaporized waste blowdown stream 117 as a fuel to the fired equipment 14.

Referring to the same examples of figures 2 and 5, the supplemental blowdown stream vaporizer 140 comprises a supplemental blowdown vaporization chamber 160 comprising a supplemental waste blowdown outlet 180 configured to discharge a supplemental waste blowdown stream 110 comprising traces of water and oil contaminants from said supplemental blowdown vaporization chamber. Thus, said supplemental waste blowdown outlet is configured for providing the supplemental waste blowdown stream 110 to be disposed (NNF, normally no flow), or to be used as a reducing agent, in particular as a nitrogen oxide reducing agent.

The pressure of the vaporization chamber 6 of the vaporizer 4 can be higher than the pressure of the blowdown vaporization chamber 60 of the blowdown stream vaporizer 40. The pressure of the vaporization chamber of the vaporizer 4 is comprised between 20 and 40 bars, preferably around 30 bars such that the purity of the ammonia of the vaporized purified ammonia stream 7 is optimized.

As particularly illustrated in figures 1, 2, 4 and 5, the vaporizer 4 comprises a heat exchanger 30, in particular comprising at least one tube configured for receiving a heating medium, said heat exchanger arranged to provide heat to at least partially vaporize the feedstock stream 3 in said vaporization chamber 6. Said heat exchanger comprises an inlet 32 for receiving a heating medium, and an outlet 34 for letting out the heating medium. Of course, in the scope of the invention, the blowdown stream vaporizer 40 and/or the blowdown stream vaporizer 140 may as well comprise a similar heat exchanger. The blowdown stream vaporizers 40 and 140 may comprise a heat exchanger 130 comprising an inlet 432 for receiving a heating medium, and an outlet 434 for letting out the heating medium. Different heating mediums may be used for each of the vaporizer, blowdown stream vaporizer and supplemental blowdown stream vaporizer, such as process streams from the ammonia cracking process or utilities, such as steam.

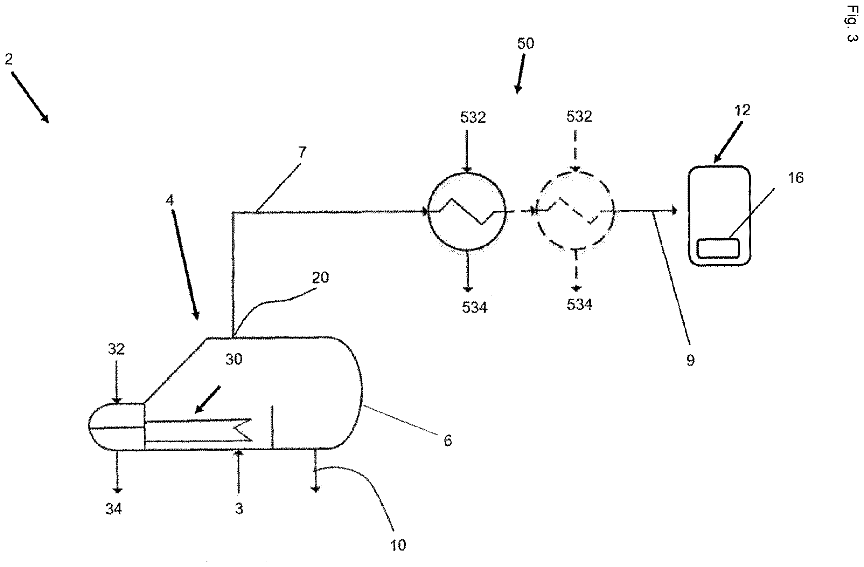

In the example of figure 3, the apparatus 2 comprises two superheaters 50 downstream of the vapor outlet 20 so as to superheat the vaporized purified ammonia stream 7. Thus, a superheated vaporized purified ammonia stream 9 is provided.

This way, a heat input required at the ammonia cracking reactor 12 can be minimized and the yield of ammonia cracking reaction can be optimized.

The superheating could be integrated in the first section of at least one ammonia cracker tube (not represented), said ammonia cracker tube being arranged in the ammonia cracking reactor 12.

As particularly illustrated in figures 4 and 5, the apparatus 2 comprises two fuel superheaters 52 to superheat said vaporized blowdown stream 17 to provide a superheated blowdown stream 21 as a fuel to the fired equipment 14.

In other words, the fuel superheaters 52 are downstream of the blowdown stream vaporizer 40, so as to avoid condensation along the line downstream, and thus to avoid corrosion caused by condensation.

As particularly illustrated in figure 5, the apparatus 2 comprises two fuel superheaters 52 to superheat said vaporized blowdown stream 17 and said vaporized waste blowdown stream 117 to provide a superheated blowdown stream and a superheated vaporized blowdown stream 21 as a fuel to the fired equipment 14.

The fuel superheaters 52 are downstream of the blowdown vapor outlet 120 of the blowdown stream vaporizer 40 and of the supplemental blowdown vapor outlet 122 of the blowdown stream vaporizer 160, as shown in figure 5.

The superheaters 50 or the fuel superheaters 52 comprise each an inlet 532 for receiving a heating medium, and each an outlet 534 for letting out the heating medium.

The pressure of the vaporization chamber 6 is comprised between 20 and 60 bars, preferably comprised between 25 and 35 bars.

The vaporized purified ammonia stream, has a purity of ammonia ranging from 99.5 to 99.99 w/w %.

The vaporized purified ammonia stream 7 comprises water traces below 0.5 w/w%, preferably below 0.1 w/w%, more preferably between 0.01 and 0.05 w/w%.

The blowdown stream 10 comprises water traces equal or above 0.5 w/w%, preferably above 5 w/w%.

For instance, the vaporized purified ammonia stream 7 for the ammonia cracking reaction comprises water traces below 0.05 w/w%, whereas the "blowdown stream 10" comprises water traces equal or above 0.5 w/w%.

Therefore, such removal with the blowdown stream 10 significantly decreases the water traces in said vaporization chamber 6.

The blowdown stream 10 comprises between 70 and 95 w/w % of ammonia.

## Claims

1. An apparatus (2) for producing hydrogen, from a feedstock stream (3) comprising ammonia and traces comprising traces of water and/or oil contaminants, said apparatus (2) comprising:
- a vaporizer (4) comprising a vaporization chamber (6) configured to receive the feedstock stream (3) and produce a vaporized purified ammonia stream (7), said vaporization chamber (6) comprising a blowdown outlet (8) configured to discharge a blowdown stream (10) comprising the traces of water and/or oil contaminants from said vaporization chamber (6);
- an ammonia cracking reactor (12) for performing an endothermic reaction of said vaporized purified ammonia stream (7), thereby producing said hydrogen; and
- a fired equipment (14);
wherein said blowdown outlet (8) is connected to the fired equipment (14) for providing the blowdown stream (10) as an ammonia fuel stream to the fired equipment (14).

2. The apparatus (2) according to the preceding claim, wherein the fired equipment (14) comprises a furnace arranged in a thermal communication with the ammonia cracking reactor (12) to provide heat to the endothermic reaction.

3. The apparatus (2) according to any one of the preceding claims, wherein the apparatus (2) comprises a blowdown stream vaporizer (40) to vaporize said blowdown stream (10) and provide a vaporized blowdown stream as a fuel to the fired equipment (14).

4. The apparatus (2) according to the preceding claim, wherein the blowdown stream vaporizer (40) comprises a blowdown vaporization chamber (60) comprising a waste blowdown outlet (80) configured to discharge a waste blowdown stream (100) comprising traces of water and/or oil contaminants from said blowdown vaporization chamber.

5. The apparatus (2) according to the preceding claim, wherein the apparatus (2) comprises a supplemental blowdown stream vaporizer (140) to vaporize said waste blowdown stream (100) and provide a vaporized waste blowdown stream as a fuel to the fired equipment (14).

6. A process for producing, from a feedstock stream (3) comprising ammonia and traces comprising traces of water and/or oil contaminants :
- a vaporized purified ammonia stream (7) for an ammonia cracking reaction, and
- at least one blowdown stream (10) as an ammonia fuel stream, in particular for combustion;
said process comprising the following steps:
- providing the feedstock stream (3) in a vaporization chamber (6) configured to receive the feedstock stream (3);
- vaporizing a part of the feedstock stream (3) thereby producing said vaporized purified ammonia stream (7) being vaporized; and
- removing the traces of water and/or oil contaminants from said vaporization chamber (6), said traces being carried away as a part of the blowdown stream (10) exiting via a blowdown outlet.

7. The process according to the preceding claim, wherein the process comprises the step of:
- continuously removing the traces of water and/or oil contaminants, in particular in the liquid phase, from said vaporization chamber (6), said traces being continuously carried away by the blowdown stream (10) exiting via the blowdown outlet (8).

8. The process according to claim 6 or 7, wherein said ammonia fuel stream is combusted to provide a heat input to the process, in particular to provide heat to the ammonia cracking reaction.

9. The process according to any one of claims 6 to 8, wherein said process comprises the step of:
- vaporizing a part of the blowdown stream (10) to provide a vaporized blowdown stream as said ammonia fuel stream to be combusted.

10. The process according to any one of claims 6 to 9, wherein the process comprises removing the traces of water and/or oil contaminants from the blowdown stream (10), said traces exiting via a waste blowdown stream (100).

11. The process according to the preceding claim, wherein the process comprises discontinuously removing, with a regular time interval, the traces of water and/or oil contaminants from the blowdown stream (10), said traces exiting via the waste blowdown stream (100).

12. The process according to claim 10 or 11, wherein said process comprises the step of:
- vaporizing a part of the waste blowdown stream (100) to provide a vaporized waste blowdown stream as a fuel to be combusted to provide a heat input to the process, in particular to provide heat to the ammonia cracking reaction.

13. The process according to any one of claims 10 to 12, wherein the process comprises removing the traces of water and/or oil contaminants from the waste blowdown stream, said traces exiting via a supplemental waste blowdown stream (110).

14. The process according to the preceding claim, wherein the process comprises discontinuously removing, with a regular time interval, the traces of water and/or oil contaminants from the waste blowdown stream, said traces exiting via the supplemental waste blowdown stream (110).

15. The process according to any one of claims 6 to 14, wherein the process comprises controlling the vaporization of the feedstock stream (3), said process comprises the following steps:
- analyzing the water content in the vaporized purified ammonia and blowdown stream(s);
- comparing the water content with a predetermined value of the water content;
- adjusting the flow rate of the blowdown stream (10) to regulate the water content in the vaporized purified ammonia stream (7).
